# EUROPÄISCHE PATENTSCHRIFT

(11) **EP 2 210 833 B1**
(45) Veröffentlichungstag und Bekanntmachung des Hinweises auf die Patenterteilung: **09.05.2012**
(21) Anmeldenummer: 10000461.3
(22) Anmeldetag: 19.01.2010
(51) Int. Cl.: B65G 7/06, B65G 51/03, B23Q 1/38, F16K 15/04

(54) **Vorrichtung zum Fördern von Objekten auf einem Luftkissen**
Device for conveying objects on an aircushion
Dispositif de transport d'objets sur un coussin d'air

(30) Priorität: 27.01.2009 DE 102009006215
(43) Veröffentlichungstag der Anmeldung: 28.07.2010
(73) Patentinhaber: Lange, Knut, 50859 Köln (DE)
(72) Erfinder: Lange, Knut, 50859 Köln (DE)
(74) Vertreter: Meinke, Dabringhaus und Partner GbR

(56) Entgegenhaltungen:
- WO-A1-2009/013946
- US-A- 3 235 098
- US-A- 3 273 727

## Beschreibung

Die Erfindung richtet sich auf eine Vorrichtung zur Förderung von Objekten auf einem Luftkissen mit einer mit einer Mehrzahl von Druckluftquellen ausgerüsteten Förderfläche der im Oberbegriff des Anspruches 1 angegebenen Gattung, wie sie beispielsweise der US 3 273 727 zu entnehmen ist, wobei eine Mehrzahl von mit von den zu fördernden Objekten bewegbaren, federbelasteten Kugeln als Pneumatikventile in der Förderfläche vorgesehen sind und die Förderfläche aus einer Mehrzahl von mit wenigstens einem Pneumatikventil ausgerüsteten Ventilmodulen zusammengesetzt ist.

Derartige pneumatische Fördervorrichtungen sind in unterschiedlichen Gestaltungen auch beispielsweise in der GB 961 428, der US 32 35 098, der US 3 209 929 oder einem Gebrauchsmuster des Anmelders, nämlich dem DE 20 2007 018 661 U1, zu entnehmen.

Ein Problem der bekannten Vorrichtungen besteht u.a. in der Notwendigkeit, die jeweilige Förderfläche genau auf das Einsatzgebiet abzustimmen, d.h. die Abmessungen müssen dem Einsatzzweck angepasst sein, etwa der zur Verfügung stehenden Förderflächen in einem Flugzeugrumpf oder einer entsprechenden Förderanlage in einem Betrieb, etwa zur Zuführung von schweren Eisenplatten zu einer entsprechenden Schlagschere oder dergleichen.

Hier setzt die Erfindung an, deren Aufgabe darin besteht, eine Vorrichtung zu schaffen, die dem jeweiligen Einsatzzweck einfach anpassbar ist, ggf. auch durch bauliche Veränderungen in ihrer Größe oder Ausrichtung veränderbar ist.

Mit einer Vorrichtung der eingangs bezeichneten Art wird diese Aufgabe gemäß der Erfindung dadurch gelöst, dass jedes Ventilmodul von einer Bodenplatte und einer mittels Abstandhaltern darüber positionierten Deckplatte gebildet ist, wobei die Deckplatte von wenigstens einem Teil einer federbelasteten ventilkugel durchsetzt ist.

Dadurch, dass die Förderfläche aus den erfindungsgemäß gestalteten Modulen zusammengesetzt ist, kann sie einfach den jeweiligen Größen angepasst werden, wobei diese Gestaltung auch kostengünstiger ist, da die Module aus einer entsprechenden Lagerhaltung entnommen und dann in die jeweiligen Vorrichtungsflächen zusammengesetzt werden können, wobei die einzelnen Module wirtschaftlich herstellbar sind.

Ausgestaltungen der Erfindung ergeben sich aus den Unteransprüchen, dabei kann vorgesehen sein, dass jedes Ventilmodul in einem die Fläche der Ausdehnung der Fördervorrichtung bestimmenden Dichtrahmen und an dem oder den Nachbarmodul/en so durchsetzt ist, dass im Wesentlichen Luftdichtheit gegeben ist, allerdings wird gezielt hier ein geringfügiger Luftaustritt in Kauf genommen, nicht zuletzt um die Leistungsfähigkeiten der die Luft fördernden Pumpen nicht zu sehr zu belasten, was bei einer absoluten Luftdichtheit zu Schäden an den Pumpem führen könnte.

Die Erfindung sieht auch in Ausgestaltung vor, dass jedes Ventilmodul mit wenigstens zwei Pneumatikventilen ausgerüstet ist, wobei auch vorgesehen sein kann, dass die Ventilmodule kachelartig innerhalb eines Dichtrahmens positionierbar sind.

Weitere Vorteile, Merkmale und Einzelheiten der Erfindung ergeben sich aufgrund der nachfolgenden Beschreibung sowie anhand der Zeichnung. Diese zeigt in
- Fig. 1: ein quadratisches Ventilmodul der Fördervorrichtung nach der Er-

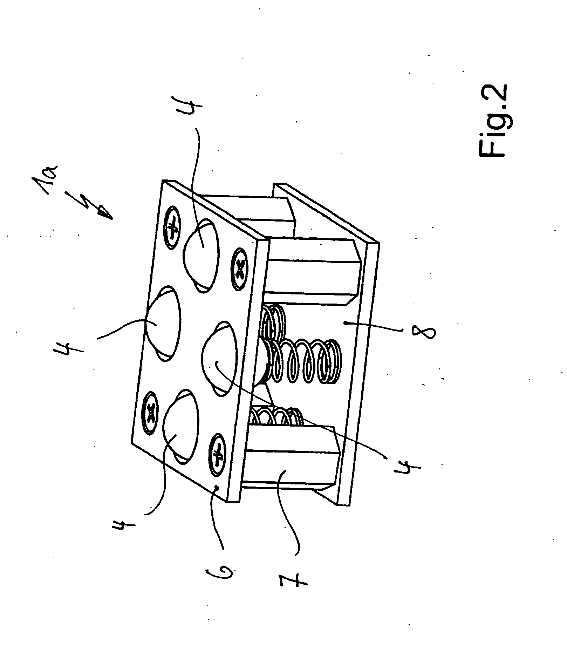

- Fig. 2: findung mit einer Ventilkugel in räumlicher Darstellung, in gleicher Darstellung ein Modul mit vier Ventilkugeln,
- Fig. 3: ein rechteckiges Ventilmodul mit einer Ven- tilkugel,
- Fig. 4: ein rechteckiges Ventilmodul mit zwei Ven- tilkugeln,
- Fig. 5: ein in Aufsicht L-förmiges Ventilmodul mit einer Ventilkugel,
- Fig. 6: in gleicher Darstellung wie in Fig. 5 ein Ventilmodul mit drei Ventilkugeln,
- Fig. 7: eine abgewandelte Ausführung des Ventilmo- duls mit vier Ventilkugeln,
- Fig. 8: eine Vorrichtung vor einer angedeuteten Schere mit aufgelegter Metallplatte als An- wendungsbeispiel sowie in den
- Fig. 9 und 10: in gleicher Darstellung wie Fig. 8 abwandel- te Vorrichtungbeispiele.

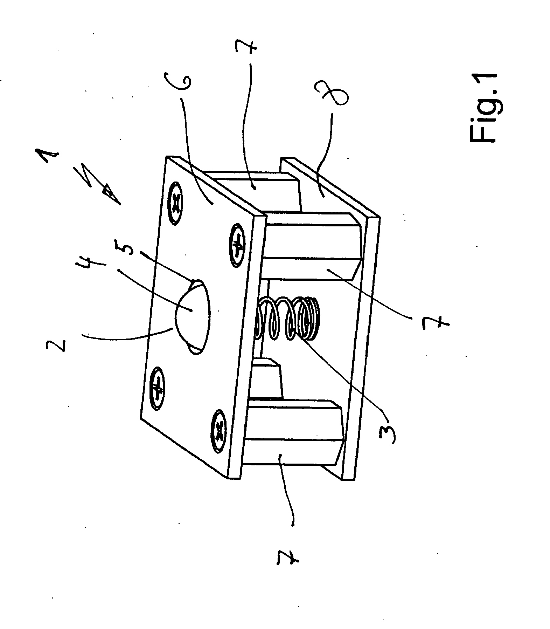

In Fig. 1 ist ein Ventilmodul, allgemein mit 1 bezeichnet, der Fördervorrichtung nach der Erfindung dargestellt. Ein solches Ventilmodul 1 weist ein wiederum im Wesentlichen vereinfacht wiedergegebenes Pneumatikventil 2 auf, welches von einer von einer Feder 3 beaufschlagten Dichtkugel 4 gebildet ist, die eine Durchgangsbohrung 5 in einer Deckplatte 6 des Modules 1 durchsetzt. Um einen Raum für von einer Pumpe stammende Druckluft bereitzustellen, ist eine Deckplatte 6 über Abstandhalter 7 mit einer Bodenplatte 8 verbunden, auf der sich auch die Druckfeder 3 abstützt.

Ist der zwischen Deckplatte 6 und Bodenplatte 8 gebildete Raum mit Druckluft gefüllt und wird von einem Gegenstand die Ventilkugel 4 bei Verschieben über die Deckplatte 6 nach unten gedrückt, so bildet sich ein Durchgangsraum für die Druckluft, die dann nach oben unter das zu fördernde Objekt strömt, wie dies bei derartigen Fördereinrichtungen bekannt ist.

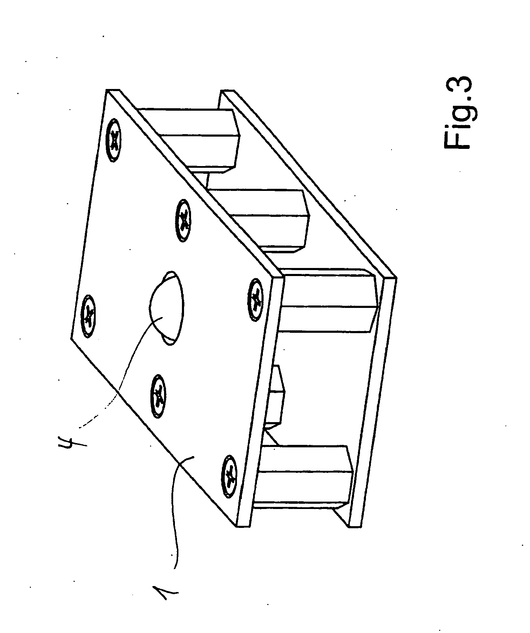

Bei der nachfolgenden Beschreibung der Ausführungen der Module nach den Fig. 3 bis 7 werden alle funktionsmäßig gleichen Teile mit der gleichen Bezugsziffer bezeichnet, selbst dann, wenn sie geometrisch anders gestaltet sind.

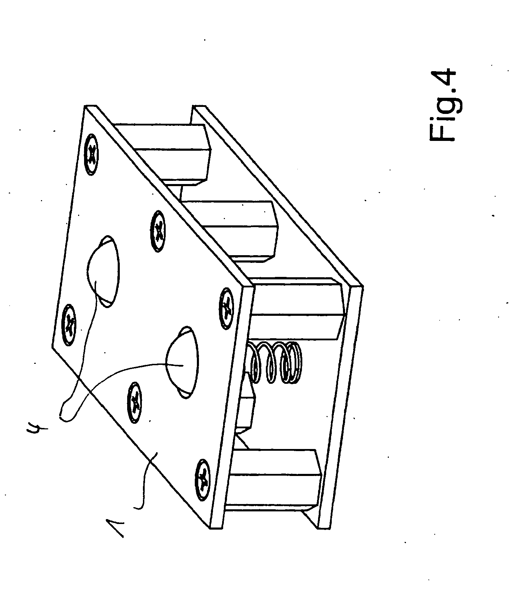

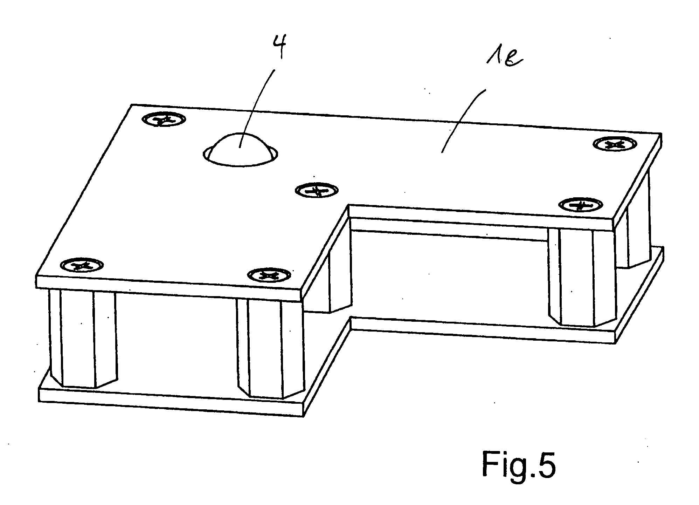

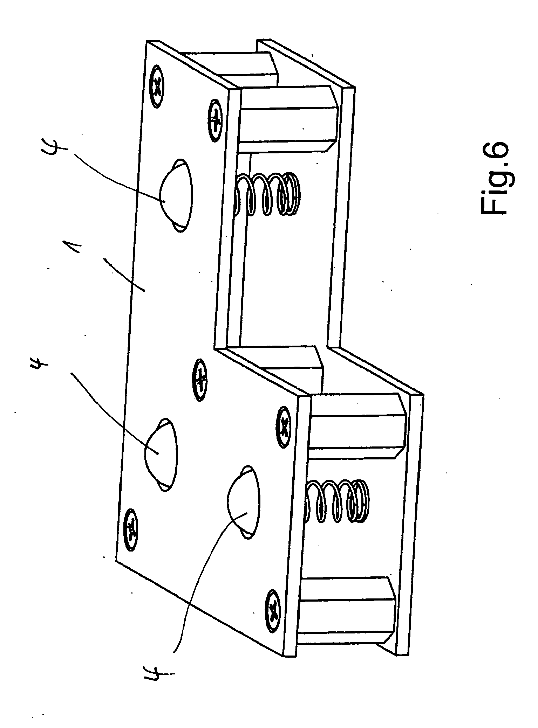

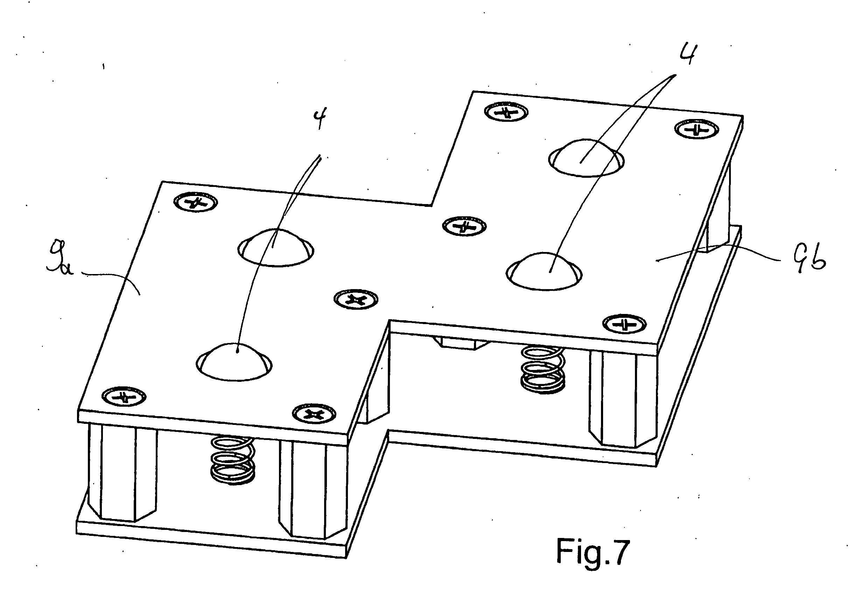

Dabei zeigt die Fig. 3 ein rechteckiges Ventil mit Modul 1 mit einer Ventilkugel 4, die Fig. 4 ein rechteckiges Ventilmodul 1 mit zwei Ventilkugeln 4 jeweils mit zugehörigen Federn, die Fig. 5 ein in Aufsicht etwa L-förmiges Ventilmodul 1 mit einer Ventilkugel 4 während die Fig. 6 ein ebenfalls in Aufsicht L-förmiges Ventilmodul 1 zeigt mit drei Ventilkugeln 4 und die Fig. 7 demgegenüber ein in Aufsicht gestuftes Ventilmodul 1 mit zwei gestuft angeordneten getrennten Flächenbereichen 9a und 9b mit je zwei Ventilkugeln 4.

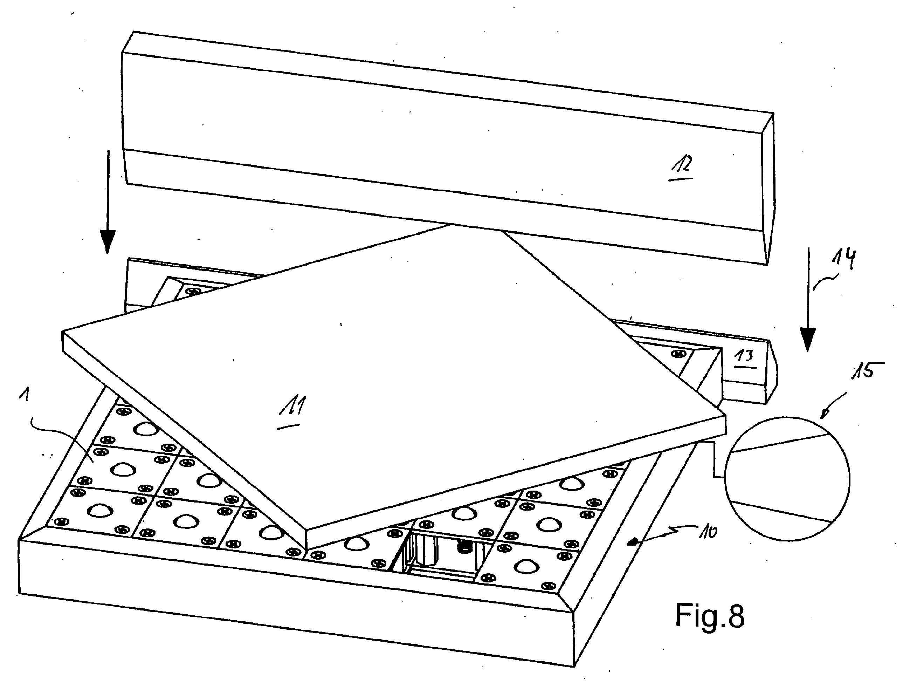

In Fig. 8 ist ein Anwendungsbeispiel von einer Mehrzahl von Ventilmodulen nach Fig. 1 dargestellt, die von einem die Förderfläche definierenden Rahmen, z.B. aus Metallprofilen, eingefasst werden, um den Hohlraum zwischen der jeweiligen Deckplatte 6 und der Bodenplatte 8 abzuschließen. Dieser Rahmen ist allgemein mit 10 bezeichnet. Auf dem Rahmen liegt im dargestellten Beispiel beispielsweise eine zu beschneidende Metallplatte 11, die einer Schlagschere zugeführt wird, die durch zwei Scherenbalken 12 und 13 angedeutet ist. Die Scherrichtung ist durch einen Pfeil 14 wiedergegeben.

Auch die Druckluft fördernde Pumpe ist in Fig. 8 angedeutet und allgemein mit 15 bezeichnet.

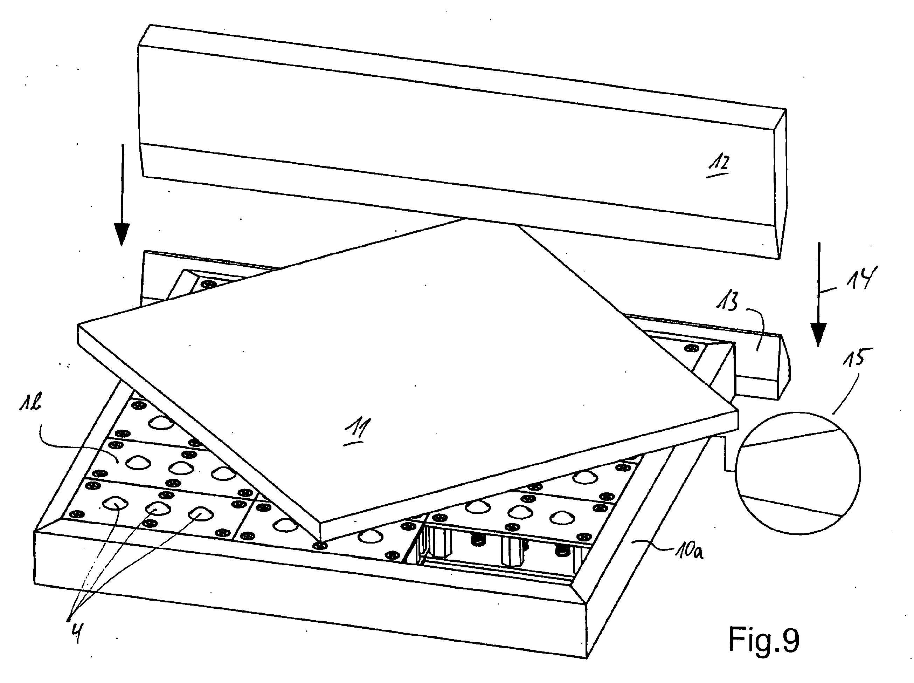

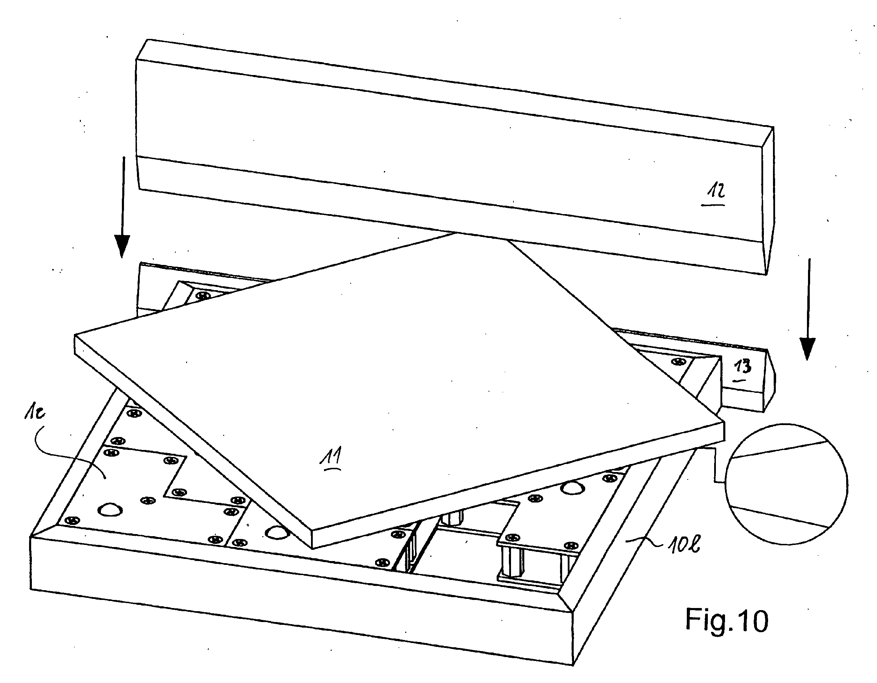

In den Fig. 9 und 10 sind in gleicher Darstellung vergleichbare Situationen wiedergegeben, hier werden durch den Rahmen 10a in Fig. 9 rechteckige Ventilmodule 1b zu einer gemeinsamen Vorrichtung zusammengefasst. Die Ventilmodule 1b sind in dem dortigen Beispiel je mit drei Ventilkugeln 4 ausgerüstet. Schließlich ist in Fig. 10 ein Vorrichtungsrahmen 10b wiedergegeben, wobei dort die Ventilmodule 1c in solchen Modulen nach Fig. 5 entsprechend und fliesenartig zu einer Gesamtfläche zusammengesetzt sind.

Natürlich sind die beschriebenen Ausführungsbeispiele der Erfindung noch in vielfacher Hinsicht abzuändern, ohne den Grundgedanken zu verlassen, so können die Ventilmodule in Aufsicht jeder gängigen Fliesenform angepasst sein, die es zulässt, einen geschlossenen Rahmen insgesamt auszufüllen, wobei auch vorgesehen sein kann, wie bei Fliesen auch üblich, eventuell entstehende, von der jeweiligen Deckplatte nicht abgedeckte Lücken durch Füllstücke auszufüllen, wenn dies notwendig sein sollte, etwa Handbereiche bei einem gekrümmten Außenrahmen einer entsprechenden Förderfläche.

## Patentansprüche

1. Vorrichtung zur Förderung von Objekten auf einem Luftkissen mit einer mit einer Mehrzahl von Druckluftquellen ausgerüsteten Förderfläche, wobei eine Mehrzahl von mit von den zu fördernden Objekten bewegbaren, federbelasteten Kugeln als Pneumatikventile in der Förderfläche vorgesehen sind, und
die Förderfläche aus einer Mehrzahl von mit wenigstens einem Pneumatikventil ausgerüsteten Ventilmodulen zusammengesetzt ist,
**dadurch gekennzeichnet,**
**dass** jedes Ventilmodul (1) von einer Bodenplatte (8) und einer mittels Abstandhaltern (7) darüber positionierten Deckplatte (6) gebildet ist, wobei die Deckplatte (6) von wenigstens einem Teil einer federbelasteten Ventilkugel (4) durchsetzt ist.

2. Vorrichtung nach Anspruch 1,
**dadurch gekennzeichnet,**
**dass** jedes Ventilmodul (1) in einem die Fläche der Ausdehnung der Fördervorrichtung bestimmenden Dichtrahmen (10) und an dem oder den Nachbarmodul/en (1) positioniert ist.

3. Vorrichtung nach Anspruch 1 oder 2,
**dadurch gekennzeichnet,**
**dass** jedes Ventilmodul (1) mit wenigstens zwei Pneumatikventilen (3,4) ausgerüstet ist.

4. Vorrichtung nach einem der vorangehenden Ansprüche,
**dadurch gekennzeichnet,**
**dass** das Ventilmodul (1) rechteckig, quadratisch oder derart mehreckig ausgebildet ist, dass die Fläche der Fördervorrichtung aus einer Vielzahl von Modulen gebildet ist.

5. Vorrichtung nach einem der vorangehenden Ansprüche,
**dadurch gekennzeichnet,**
**dass** die Ventilmodule (1) kachelartig innerhalb eines Dichtrahmens positioniert sind.

## Claims

1. Device for conveying objects on an air cushion having a conveying surface equipped with a plurality of compressed-air sources, a plurality of spring-loaded balls, which can be moved by the objects to be conveyed, being provided in the conveying surface as pneumatic valves, and the conveying surface being made up of a plurality of valve modules equipped with at least one pneumatic valve,
**characterised in that**
every valve module (1) is formed by a base plate (8) and a cover plate (6) positioned above the base plate by means of spacers (7), the cover plate (6) being penetrated by at least a portion of a spring-loaded valve ball (4).

2. Device according to claim 1,
**characterised in that**
every valve module (1) is positioned in a sealing frame (10) which defines the area of the expanse of the conveying device and against the adjacent module(s) (1).

3. Device according to either claim 1 or claim 2,
**characterised in that**
every valve module (1) is equipped with at least two pneumatic valves (3, 4).

4. Device according to any one of the preceding claims,
**characterised in that**
the valve module (1) has a rectangular, square or polygonal configuration in such a way that the surface area of the conveying device is formed from a large number of modules.

5. Device according to any one of the preceding claims,
**characterised in that**
the valve modules (1) are positioned in a tile-like manner within a sealing frame.

## Revendications

1. Dispositif pour le transport d'objets sur un coussin d'air avec une surface de transport pourvue d'une pluralité de sources d'air comprimé, dans lequel il est prévu une pluralité de billes sollicitées par un ressort, pouvant être déplacées par les objets à transporter, sous la forme de soupapes pneumatiques dans la surface de transport et la surface de transport est composée d'une pluralité de modules de soupape pourvus d'au moins une soupape pneumatique,
**caractérisé en ce que**
chaque module de soupape (1) est formé d'une plaque de fond (8) et d'une plaque de couverture (6) positionnée par-dessus au moyen d'écarteurs (7), dans lequel la plaque de couverture (6) est traversée d'au moins une partie d'une bille de soupape (4) sollicitée par un ressort.

2. Dispositif selon la revendication 1,
**caractérisé en ce que**
chaque module de soupape (1) est positionné dans un cadre hermétique (10) déterminant la surface de l'extension du dispositif de transport et sur le ou les modules voisins (1).

3. Dispositif selon la revendication 1 ou 2,
**caractérisé en ce que**
chaque module de soupape (1) est équipé d'au moins deux soupapes pneumatiques (3,4).

4. Dispositif selon l'une quelconque des revendications précédentes, **caractérisé en ce que**
le module de soupape (1) se présente sous une forme rectangulaire, carrée ou polygonale de sorte que la surface du dispositif de transport soit formée d'une pluralité de modules.

5. Dispositif selon l'une quelconque des revendications précédentes, **caractérisé en ce que**
les modules de soupape (1) sont positionnés sous forme carrelée dans un cadre hermétique.
